# EUROPÄISCHE PATENTSCHRIFT

(11) **EP 1 090 251 B1**
(45) Veröffentlichungstag und Bekanntmachung des Hinweises auf die Patenterteilung: **30.06.2004**
(21) Anmeldenummer: 99920618.8
(22) Anmeldetag: 09.04.1999
(51) Int. Cl.: F17C 13/02, F17C 9/00, F02M 21/02

(54) **SYSTEM ZUM VERSORGEN EINES VERBRAUCHERS MIT EINEN KRYOGENEM MEDIUM**
SYSTEM FOR PROVIDING A CONSUMER WITH A CRYOGENIC MEDIUM
SYSTEME POUR ALIMENTER UN CONSOMMATEUR AVEC UN MILIEU CRYOGENIQUE

(30) Priorität: 20.04.1998 DE 19817448
(43) Veröffentlichungstag der Anmeldung: 11.04.2001
(73) Patentinhaber: Messer Griesheim GmbH, 65933 Frankfurt am Main (DE)
(72) Erfinder: MACHEL, Michel, D-50769 Köln (DE)
(86) Internationale Anmeldenummer: PCT/EP1999/002406
(87) Internationale Veröffentlichungsnummer: WO 1999/054657

(56) Entgegenhaltungen:
- DE-A- 19 546 617
- US-A- 4 080 800
- US-A- 5 081 977
- US-A- 5 136 852
- US-A- 5 247 959

## Beschreibung

Die Erfindung betrifft ein System zum Versorgen eines Verbrauchers mit einem kryogenen Medium aus einem Kryotank, das einer Regeleinheit als gasförmige oder flüssige Phase dem Verbraucher zugeführt wird, der über eine Leitung mit der Regeleinheit verbunden ist, eine Regeleinheit zur Verwendung in dem System und ein Verfahren zum Versorgen eines Verbrauchers mit einem kryogenen Medium.

Ein Kryotank ist ein isolierter Vorratsbehälter, in dem flüssige, tiefkalte Gase (kryogene Medien) gespeichert werden. Die tiefe Temperatur kann durch eine Vakuumisolation längere Zeitspannen aufrechterhalten werden. Solche Kryotanks werden beispielsweise in der Kraftfahrzeugtechnik als Treibstofftanks eingesetzt. Sie können verflüssigten Wasserstoff (LH₂), flüssiges Methan (CH₄) oder dergleichen enthalten. Die verflüssigten Gase werden in dem Kryotank unter Überdruck gespeichert. Kryotanks für Kraftfahrzeuge werden bei der Betankung mit vorkonditioniertem tiefkalten Kryokraftstoff auf einen bestimmten Tankdruck (Dampfdruck des Tankinhaltes) eingestellt. Der eingestellte Tankdruck muß unter allen Betriebsbedingungen des Kraftfahrzeuges eine ausreichende Kryokraftstoffversorgung des Motors gewährleisteten.

Zur Druckerhöhung bzw. Druckhaltung in dem Kryotank wurden bisher elektrische Heizeinrichtungen im Inneren des Kryotanks oder Druckaufbauverdampfer eingesetzt. Ein Druckaufbauverdampfer entnimmt dem Kryotank eine kleine Menge des flüssigen Gases, das Gas wird außerhalb des Kryotanks verdampft und dem Tank wieder zugeführt. Dabei zirkuliert das "Druckaufbau-Gas" aufgrund der Druckunterschiede zwischen der flüssigen und der gasförmigen Phase ohne zusätzliche Hilfsmittel. Diese Art der Aufrechterhaltung oder Erhöhung des Innendrucks in einem Kryotank mittels Druckaufbauverdampfer eignet sich insbesondere für große, stehende Flüssiggasspeicher. Die Leistung der Druckaufbauverdampfer ist vom Füllstand in dem Speichertank abhängig. Ferner können Probleme aufgrund des Phasenwechsels entstehen.

Die auch dem Druckaufbau dienenden, oben genannten elektrischen Heizeinrichtungen sind in der Regel als Widerstandsheizungen realisiert. Diese benötigen nicht nur elektrische Energie, sondern sie erfordern auch aufwendige vakuumdichte sowie tieftemperatur- und druckbeständige Durchführungen. Bei einem Defekt erzeugen sie hohe Reparaturkosten.

Im alltäglichen Einsatz findet trotz optimierter Wärmeisolierung des Kryotanks ständig ein geringer Wärmeeinfall in den tiefkalten Kryokraftstoff statt. Dieser bewirkt einen Druckaufbau im Kryotank, der letztlich bei längeren Stillstandszeiten des Kraftfahrzeugs zu einem unerwünschten Ansprechen des Kryotanksicherheitsventils führt, über das der Kryokraftstoff an die Umgebung abgegeben wird, um ein Bersten des Kryotanks zu verhindern.

Damit ergeben sich zwei gegensinnige Forderungen für den Tankdruck:

Einerseits muß der Tankdruck ausreichend hoch sein, um im Fahrbetrieb eine sichere Versorgung des Motors mit einem Kryokraftstoff zu gewährleisten, andererseits sollte er möglichst niedrig gehalten werden, um bei Stillstandszeiten einen ausreichenden Druckunterschied bis zum Ansprechen der Behältersicherung zu gewährleisten.

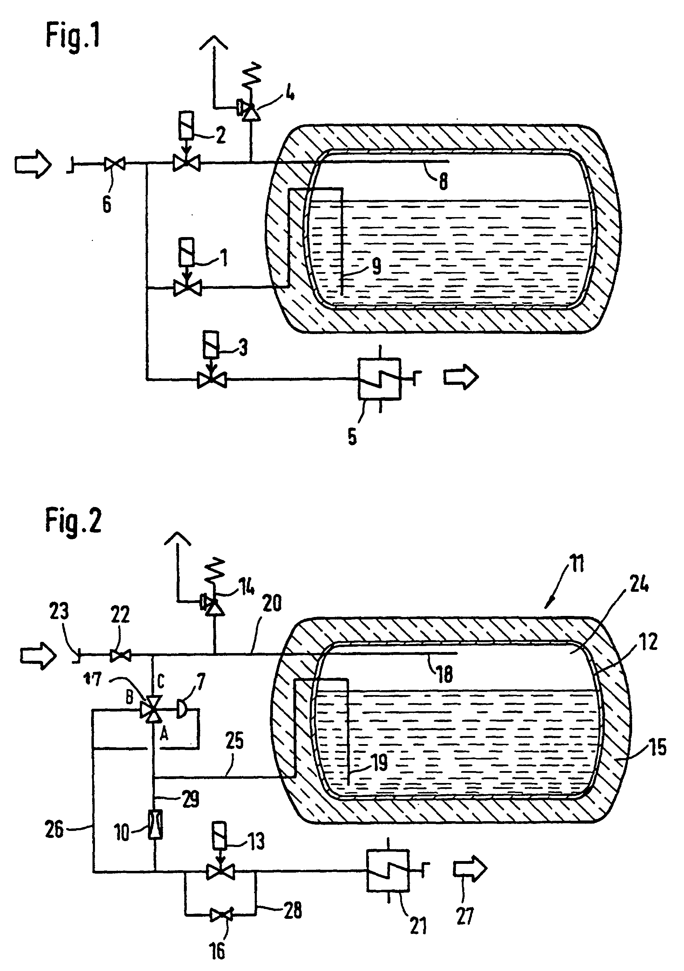

Eine bekannte Ausbildung zur Lösung dieses Problem ist in Figur 1 dargestellt. Kryotanks 11 für Kryokraftstoffe 8,9 werden üblicher Weise mit einer sogenannten Economizer-Schaltung versehen, die den Tankdruck regelt. Ist der Druck im Tank über dem Schaltdruck der Magnetventile, wird gasförmiger Kryokraftstoff für den Motor über Ventil 2 aus dem Kryotank 11 entnommen. Durch die Entnahme aus der Gasphase 8 wird dabei eine relativ schnelle Druckentlastung des Kryotanks erzielt. Bei Erreichen eines vorgegebenen Schaltdruckes wird Magnetventil 2 geschlossen und Magnetventil 1 geöffnet und flüssiger Kryokraftstoff 9 dem Motor zugeführt. Hierdurch reduziert sich die Druckabsenkung im System drastisch, kann jedoch nicht vollständig verhindert werden.

Durch geeignete Wahl dieses Schaltdruckes wird erreicht, daß der Tankdruck niemals unter den minimal erforderlichen Wert absinkt, der zur Überwindung der Druckverluste der Leitungskomponenten (Ventile, Wärmetauscher, Rohrbögen usw.) zwischen Kryotank und Motor erforderlich ist.

Diese Schaltung hat mehrere Nachteile:
- Es ist ein elektrischer Druckaufnehmer sowie eine elektrische Steuerung zur druckabhängigen Schaltung der Magnetventile erforderlich (Kosten).
- Es wird der Tankdruck geregelt und nicht der Druck in der Entnahmeleitung zum Motor. Für den Motor sind jedoch möglichst konstante Bedingungen in der Entnahmeleitung vor den Gemischventilen am Eintritt des Motors wichtig.
- Es ergeben sich Probleme bei der Entnahme von Kraftstoff für den Motor (Einbruch der Motorleistung). Wird der Fahrzeugmotor bei hohem Tankdruck gestartet, erfolgt die Entnahme über Ventil 2. Bei sinkendem Tankdruck wird schließlich Ventil 2 geschlossen und Ventil 1 geöffnet. Hierbei kommt es zu einem "Einbruch" in der Kraftstoffversorgung des Motors, da in der Leitung 9 zunächst warmes Gas vorhanden ist und dieses mit relativ hohem Druckverlust zum Fahrzeugmotor strömen muß. Erst wenn die Leitung 9 durch die Flüssigentnahme kaltgefahren ist, vermindern sich die Druckverluste und der Motor kann wieder ordnungsgemäß mit Kraftstoff versorgt werden.
- Der Umschaltdruck muß mit einem Vorhalt eingestellt werden, der der Druckabsenkung im Tank bei Flüssigentnahme entspricht.

Eine mechanische Regeleinheit zum automatischen Umschalten zwischen der gasförmigen und der flüssigen Phase ist aus der DE 195 46 617 A1 bekannt. Dieses System vermeidet zwar eine elektronische Schaltung, ermöglicht jedoch keine konstanten Bedingungen in der Leitung vor dem Motor, da die Regeleinheit einerseits keine Trennung zwischen der Versorgung des Motors aus der gasförmigen bzw. flüssigen Phase ermöglicht und andererseits bei Überschreitung des Umschaltdruckes in der Leitung vor dem Motor keine Rückführung des gasförmigen Kryokraftstoffes in die gasförmige Phase des Kryotanks in der Regeleinheit freigeschaltet wird. Das System benötigt daher eine Druckaufbaueinrichtung.

Der Erfindung liegt die Aufgabe zugrunde, ein System und ein Verfahren zum Versorgen eines Verbrauchers mit einem kryogenem Medium aus einem Kryotank sowie eine Regeleinheit anzugeben, mit denen ein Verbraucher nahezu gleichmäßig bei sich änderndem Massenverbrauch mit dem kryogenem Medium versorgt werden kann. Das System und das Verfahren sowie die Regeleinheit sollen dabei so ausgebildet sein, daß eine Druckerhöhung bzw. Druckkonstanthaltung im Kryotank ohne zusätzliche Druckaufbaueinrichtungen erreicht werden kann.

Diese Aufgabe wird durch ein System mit den Merkmalen von Anspruch 1, eine Regeleinheit mit den Merkmalen von Anspruch 10 und durch ein Verfahren mit den Merkmalen von Anspruch 13 gelöst.

Das erfindungsgemäße System zum Versorgen eines Verbrauchers mit einem kryogenen Medium (tiefkaltem verflüssigtem Gas) weist einen isolierten Kryotank für die Speicherung von flüssigem kryogenen Medium, eine Regeleinheit und eine Leitung zwischen der Regeleinheit und dem Verbraucher auf, in die ein Wärmetauscher zum Anwärmen des kryogenen Mediums integriert ist. Die Regeleinheit versorgt den Verbraucher in Abhängigkeit vom Tankdruck mit der gasförmigen oder flüssigen Phase des im Kryotank gespeicherten kryogenen Mediums. Bei sich änderndem Massenverbrauch des kryogenem Mediums durch den Verbraucher entsteht in der Leitung zwischen der Regeleinheit und dem Verbraucher ein Hinterdruck, der die Regeleinheit so steuert, daß nahezu unabhängig vom Tankdruck ein annähernd konstanter Druck in der Leitung zwischen der Regeleinheit und dem Verbraucher gewährleistet ist. Durch eine so ausgebildete Regeleinheit mit Hinterdrucksteuerung wird vorteilhaft eine nahezu gleichmäßige Versorgung des Verbrauchers mit dem kryogenen Medium erreicht. Dabei nutzt das System das Verhalten von siedenden Flüssigkeiten aus (thermodynamisches Gleichgewicht von siedenden Flüssigkeiten und gesättigtem Dampf), wobei bei Entnahmen aus der gasförmigen Phase des Kryotanks eine relativ schnelle Druckabsenkung und bei Entnahme aus der flüssigen Phase eine deutlich geringere Druckabsenkung erzielt wird. Dies bedeutet, daß bei hohen Tankdrücken, die deutlich über dem Umschaltdruck der Regeleinheit liegen (z. B. nach längeren Stillstandszeiten ohne Entnahme aus dem Kryotank), durch Entnahme aus der Gasphase eine relativ schnelle Druckabsenkung im Kryotank stattfindet bis auf den Umschaltdruck der Regeleinheit. Das System mit der proportional arbeitenden Regeleinheit und das Verfahren sind vorzugsweise für die Versorgung von Fahrzeugmotoren mit kryogenen Kraftstoffen vorgesehen. Mit diesem System wird der Druck in der Leitung zum Motor und dabei indirekt auch der Tankdruck geregelt. Die in dem System verwendete Regeleinheit besteht aus einer Ventilschaltung mit Hinterdrucksteuerung. Neben der mechanischen Regeleinheit ist selbstverständlich auch eine elektronische Schaltung möglich, die den Hinterdruck in der Leitung zwischen Regeleinheit und Motor erfaßt und die Ventile in Abhängigkeit vom Hinterdruck schaltet.

Hinter der Regeleinheit wird der kryogene Kraftstoff in einem mit Motorkühlwasser betriebenen Wärmetauscher verdampft, auf Umgebungstemperatur angewärmt und anschließend über die nicht näher dargestellten Gemischventile dem Motor zugeführt. Im Fahrbetrieb variiert in Abhängigkeit von Lastzuständen die entnommene Masse des Kryokraftstoffs ständig. Hierbei treten Zustände auf, bei denen größere Massen des Kryokraftstoffs verdampft werden, als momentan vom Motor benötigt werden (Lastwechsel von großer Motorleistung auf geringere Motorleistung). Diese überschüssigen Mengen führen zu einem Druckanstieg in der Leitung zwischen Motor und Regeleinheit. Dies bewirkt, daß der Hinterdruck der Regeleinheit über den Umschaltdruck ansteigt und in der Regeleinheit vorgesehene Mittel aktiviert werden. Die Versorgung mit flüssigem Kryokraftstoff schließt und die Versorgung mit gasförmigen Kryokraftstoff öffnet, da die Mittel einen federbelasteten Hinterdruckschließteller aufweisen, der bei einem Überschreiten eines vorgegebenen Umschaltdruckes im Hinterdruckraum der Regeleinheit einen mit der gasförmigen Phase des Kryotanks verbundenen Kanal öffnet. Der überschüssige gasförmige Kryokraftstoff strömt dabei in den Gasraum des Kryotanks zurück und führt hier zu einem Druckanstieg. Durch die Rückführung des gasförmigen Mediums in die gasförmige Phase des Kryotanks kann vorteilhaft auf Druckaufbaueinrichtungen verzichtet werden, da bei Laständerungen des Verbrauchers der Tankdruck erhöht wird.

Vorteilhaft weist das Mittel ein Einstellelement für den vorzugebenden Umschaltdruck von der gasförmigen Phase auf die flüssige Phase auf, das die Federkraft des federbelasteten Hinterdruckschließtellers verändert, so daß der Umschaftdruck der Regeleinheit zwischen der gasförmigen und der flüssigen Phase einstellbar ist. Die in dem System verwendete Regeleinheit ist so ausgebildet, daß der Umschaltdruck der Regeleinheit von der gasförmigen Phase auf die flüssige Phase bei großen Verbrauchsmassen sich bei höherem Tankdruck einstellt als bei geringen Verbrauchsmassen, d.h. bei großen Entnahmemengen durch den Motor (große Motorleistung und große Druckverluste zwischen Tank und Regeleinheit) wird bei höheren Tankdrücken umgeschaltet. Ist die Entnahmemenge gering (kleine Motorleistung und geringe Druckverluste), erfolgt die Umschaltung erst bei geringen Tankdrücken.

Der Leitung zwischen Regeleinheit und Motor ist zusätzlich eine geringe Masse des kryogenen flüssigen Mediums - des flüssigen Kryokraftstoffs - zuführbar. Dies geschieht über eine Bypassleitung mit einem Drosselglied, die eine vom Kryotank zur Regeleinheit geführte Entnahmeleitung für die flüssige Phase überbrückt. Diese Drosselstelle ist strömungstechnisch auf die Regeleinheit abgestimmt und dient ausschließlich zum Kaltfahren der Leitung zwischen der Flüssigphase des Tanks und der Regeleinheit. Bei hohem Tankdruck findet so neben der Entnahme aus der Gasphase des Kryotanks zusätzlich eine geringfügige Entnahme aus der flüssigen Phase statt. Hierdurch wird beim Umschaltdruck der Regeleinheit ein "Einbruch" in der Kraftstoffversorgung vermieden.

Die Regeleinheit weist einen Eingang für einen flüssigen Kryokraftstoff und einen Eingang für den gasförmigen Kryokraftstoff auf, die jeweils mit der gasförmigen Phase bzw. der flüssigen Phase des Kryotanks verbunden sind und die jeweils über ein Ventil mit einem Ausgang für den Kryokraftstoff verbunden sind. Das Ventil für den gasförmigen Kryokraftstoff weist ein längsbewegliches Rohr auf, das in eine Hinterdruckkammer geführt ist. Ein in der Hinterdruckkammer angeordneter federbelasteter Hinterdruckschließteller eines Faltenbalgs liegt bei einem vorgegebenen Druck an der Austrittsöffnung des Rohres an. Das Ventil für das flüssige Medium weist einen Faltenbalg mit Schließteller auf, der mit dem Rohr verbunden ist und die Hinterdruckkammer gegenüber dem Eingang für den flüssigen Kryokraftstoff abschließt.

Das Ventil für die flüssige Phase ist hierbei so ausgebildet, daß es sich allein durch die an seinem Schließteller angreifenden Druckkräfte in Verbindung mit der Federkraft des Faltenbalges immer in die Zu-Stellung bewegen will. Eine Betätigung des Ventils für die flüssige Phase erfolgt ausschließlich durch das mit seinem Schließteller fest verbundene Rohr.
Dadurch, daß der Hinterdruckschließteller eine deutlich größere druckbeaufschlagte Fläche aufweist als der freie Querschnitt des Rohres, wird bei ansteigendem Hinterdruck der federbelastete Hinterdruckschließteller nach unten gedrückt. Hierbei bewegt sich das Rohr mit nach unten und schließt zunächst das Ventil für die flüssige Phase. Bei weiterer Erhöhung des Hinterdruckes wird anschließend der Kanal für die Gasphase freigegeben.

Das Verfahren zum Versorgen eines Verbrauchers mit einem kryogenen Medium aus einem Kryotank, das in Abhängigkeit von dem Tankdruck über eine Regeleinheit als gasförmige oder flüssige Phase dem Verbraucher zugeführt wird, ist vorteilhaft dadurch gekennzeichnet, daß das kryogene Medium nach der Regeleinheit verdampft und dem Verbraucher gasförmig zugeführt wird und daß der Druck des verdampfenden kryogenen Mediums zwischen der Regeleinheit und dem Verbraucher als Regel- oder Steuergröße so für die Regeleinheit verwendet wird, daß über die Regeleinheit gasförmiges oder flüssiges Medium zu dem Verbraucher geführt oder gasförmiges Medium in den Kryotank zurückgeführt wird und zwischen der Regeleinheit und dem Verbraucher ein nahezu konstanter Druck eingestellt wird.

Weitere vorteilhafte Ausbildungen der Erfindung sind in den Unteransprüchen angegeben.

Das erfindungsgemäße System, die Regeleinheit und das Verfahren erfüllen vorteilhaft fünf Funktionen:
- Bei zu hohem Tankdruck (z. B. nach Stillstandszeiten des Fahrzeugs) reduziert es im Fahrbetrieb schnell den Druck des Kryotankes durch Entnahme aus der Gasphase. Hierdurch wird erreicht, daß bei Stillstandzeiten ein Ansprechen des Kryotanksicherheitsventils vermieden werden kann (ausreichender Druckunterschied zwischen Arbeitsdruck des Tanks und Ansprechdruck des Sicherheitsventils).
- Bei zu niedrigem Tankdruck (z. B. nach der Betankung) bewirkt die Erfindung in Verbindung mit dem nachgeschalteten Wärmetauscher einen schnellen Druckaufbau im Tank bis auf den Umschaltdruck der Regeleinheit.
- Die Umschaltung von Gas- auf Flüssigentnahme erfolgt in Abhängigkeit des Hinterdrucks der Regeleinheit. Hierdurch wird erreicht, daß bei großen Motorentnahmemengen (großer Druckverlust zwischen Tank und Regelventil) die Umschaltung bei einem höheren Tankdruck erfolgt als bei geringeren Entnahmemengen.
- Das Zusammenspiel dieser drei Funktionen ergibt für den Betrieb des Fahrzeugs relativ konstante Druckverhältnisse im Tank. Daraus resultieren schließlich über die Hinterdruckregelung der Regeleinheit vom Durchsatz unabhängige konstante Bedingungen in der Entnahmeleitung zum Motor.
- Durch die Bypassleitung wird beim Umschalten von Gasentnahme auf Flüssigentnahme ein Einbruch in der Kraftstoffversorgung des Motors vermieden.

Ein Ausführungsbeispiel ist in der Zeichnung dargestellt und wird im folgenden näher beschrieben.

Es zeigen
- Figur 1: ein System zum Versorgen eines Verbrauchers mit einem kryogenem Medium nach dem Stand der Technik (Economizer-Schaltung)
- Figur 2: ein System zum Versorgen eines Verbrauchers mit einem kryogenem Medium nach der Erfindung
- Figur 3: eine schematische Darstellung einer Regeleinheit zur Verwendung in dem System nach Figur 2

Das in Figur 2 schematisch dargestellte Gesamtschema zeigt im wesentlichen ein System zum Versorgen eines Verbrauchers mit einem kryogenen Medium aus einem Kryotank gemäß der Erfindung. Ein Kryotank 11, d.h. ein Speichertank für bei Tieftemperatur verflüssigte Gase, welche in dem Tank unter erhöhtem Druck, zum Beispiel 4 bar, gespeichert sind, umfaßt einen inneren Speicherbehälter 12 und einen Vakuum-Isoliermantel 15. Die Vakuum-Isolation dient dazu, die Temperatur des kryogenen Mediums weitgehend aufrecht zu erhalten. Der Kryotank 11 hat bei einer typischen Anwendung im Kraftfahrzeugbereich die Form eines liegenden oder stehenden Zylinders. Übliche Tankvolumen liegen im Bereich von 80 bis 400 Litern. Beispiele für das gespeicherte flüssige kryogene Medium sind verflüssigter Wasserstoff (LH₂), oder verflüssigtes Methan (CH₄), die als Kryokraftstoff verwendet werden. Eine Leitung 20 führt in die gasförmige Phase 18 des Kryotanks 11. Über Anschluß 23 und Ventil 22 kann der Kryotank befüllt werden. Mit der Leitung 20 ist ein Kryotanksicherheitsventil 14 verbunden, über welches gasförmiger Kryokraftstoff an die Umgebung abgegeben wird, wenn im Druckgasraum 24 eine Druckerhöhung stattfindet, die über einem vorgegebenen Sicherheitsdruck liegt. Eine Leitung 25 mündet in der flüssigen Phase des im Kryotank 11 gespeicherten Kryokaftstoffes. Leitung 25 ist mit einem Eingang A und die Leitung 20 mit einem Eingang C, einer Regeleinheit 17 verbunden, deren Ausgang B über Leitung 26 mit einem Motor 27 verbunden ist. In der Leitung 26 ist ein Ventil 13 zum Absperren der Kraftstoffversorgung beim Ausschalten des Motors. Ventil 13 ist mit einer Bypassleitung 28 versehen, in der ein Überströmventil 16 angeordnet ist, so daß nach Absperren von Ventil 13 in der nachgeschalteten Leitung eingesperrtes kryogenes Medium zum Tank zurückströmen kann. in Strömungsrichtung ist dem Ventil 13 ein Wärmetauscher 21 nachgeschaltet. Eine Bypassleitung 29 verbindet die Leitung 25 mit der Leitung 26. In der Bypassleitung 29 ist ein Drosselglied 10 angeordnet.

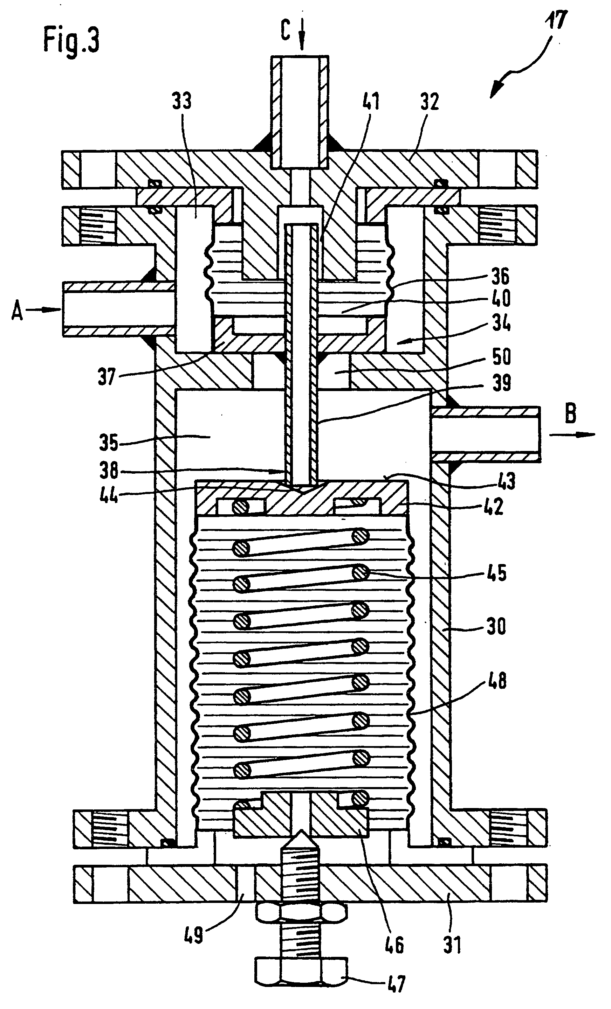

In Figur 3 ist die Regeleinheit 17 schematisch im Schnitt dargestellt. Gleiche Bauteile sind mit gleichen Bezugsziffern bezeichnet. Die Regeleinheit weist einen Grundkörper 30 auf, der über einen Verschlußkörper 31 und 32 stirnseitig gasdicht verschossen ist. Der Eingang A für das flüssige Medium mündet in einen in Grundkörper 30 ausgebildeten Raum 33 für das flüssige Medium, der über ein Ventil 34 gegenüber einem im Grundkörper 30 ausgebildeten Hinterdruckraum 35 verschließbar ist. Das Ventil 34 ist als Faltenbalg 36 mit Schließteller 37 ausgebildet. In dem Verschlußkörper 32 ist der Eingang C für das gasförmige Medium vorgesehen. Das Ventil 38 für das gasförmige Medium besteht aus einem längsbeweglichen Rohr 39, das vom Eingang C durch den Schließteller 37 in die Hinterdruckkammer 35 geführt ist. Das Rohr ist mit dem Schließteller 37 unlösbar verbunden. Raum 40 des Faltenbalges 36 ist über Verbindung 41 an Eingang C angeschlossen. Ein in der Hinterdruckkammer 35 angeordneter Hinterdruckschließteller 42 liegt an der Austrittsöffnung 44 des Rohres 39 an. Der Hinterdruckschließteller 42 wird hierzu mit einer Feder 45 die über ein Druckstück 46 und ein Einstellelement 47 in ihrer Federkraft veränderbar ist, druckbeaufschlagt. Der Hinterdruckschließteller 42 ist von einem Faltenbalg 48 umgeben, der gasdicht an dem Verschließkörper 31 befestigt. Über eine Bohrung 49 ist der Innenraum des Faltenbalges mit der Atmosphäre verbunden.

Das in den Figuren 2 beschriebene System mit der in Figur 3 beschriebenen Regeleinheit arbeitet im Fahrbetrieb des Motors wie folgt:
Die als mechanische 3/2-Wege-Druckregelventil mit Hinterdrucksteuerung ausgebildete Regeleinheit 17 ist über Einstellelement 47 auf einen festen Umschaltdruck von beispielsweise 4 bar eingestellt. Unterhalb dieses Hinterdruckes liegt der Hinterdruckschließteller 42 mit der Fläche 43 an der Austrittsöffnung 44 des Rohres 39 an und dichtet den mit der Gasphase 18 des Kryotanks 11 verbundenen Eingang C gegenüber dem Hinterdruckraum 35 und dem Ausgang B ab. Entsprechend dem Wert, um den der Hinterdruck gegenüber dem Umschaltdruck erniedrigt ist, wird das längsbewegliche Rohr 39 von dem Hinterdruckschließteller 42 in Richtung zum Eingang C verschoben. Ein am Verschlußkörper 32 vorgesehener Anschlag begrenzt den Verschiebeweg des Rohres 39. Der mit dem längsbeweglichen Rohr verbundene Schließteller 37 wird in Richtung zum Eingang C bewegt und gibt die Öffnung 50 zwischen dem Eingang A und dem Hinterdruckraum 35 mit dem Ausgang B frei. Es strömt nunmehr flüssiger Kryokraftstoff über den Eingang A, den Raum 33, die Öffnung 50 und dem Ausgang B zu dem geöffneten Ventil 13, dem Wärmetauscher 21 und dem Motor 27. In dem Wärmetauscher 21 wird der flüssige Kryokraftstoff verdampft. Durch die Entnahme des flüssigen Kryokraftstoffs ist die Druckabsenkung im Kryotank 11 gering. Erhöht sich der Druck im Kryotank 11 und daraus folgend der Druck im Hinterdruckraum 35 der Regeleinheit 17 über den Umschaltdruck, so verschiebt sich der Hinterdruckschließteller 42 gegen die Kraft der Feder 45 nach unten und gibt schließlich die Austrittsöffnung 44 des Rohres 39 frei. In der zeitlichen Folge unmittelbar vor der Öffnung der Austrittsöffnung 44 wird die Öffnung 50 für die flüssige Phase verschlossen. Die Betätigung des Ventils 34 für die flüssige Phase erfolgt hierbei über das Rohr 39.

Es ergibt sich damit ausschließlich eine Entnahme von gasförmigem Kryokraftstoff aus der Gasphase 18 des Kryotanks 11. In diesem Fall ist der Druck des Kryotanks 11 so hoch, daß der Hinterdruck (Druck in der Hinterdruckkammer 35) der Regeleinheit 17, der sich aus dem Druck im Kryotank 11 minus dem von der Verbrauchsmasse des Motors 27 abhängigen Strömungsdruckverlust zwischen dem Kryotankinnerem und dem Austritt B der Regeleinheit 17 ergibt, über dem eingestellten Umschaltdruck liegt.

Durch die Entnahme des gasförmigen Kraftstoffes ist die Druckabsenkung im Kryotank 11 groß und es erfolgt eine schnelle Annäherung an den Umschaltdruck.

Sinkt der Tankdruck durch die Entnahme aus der Gasphase, wird der Umschaltdruck der Regeleinheit 17 erreicht. Die proportional arbeitende Regeleinheit 17 sperrt die Entnahme über Anschluß C (Gasphase) stetig ab und öffnet anschließend stetig die Flüssigentnahme über Anschluß A. Durch die Entnahme aus der Flüssigphase 19 wird die Druckabsenkung im Kryotank 11 deutlich verlangsamt und damit auch die Absenkung des Hinterdruckes in der Regeleinheit 17.
Bei einer weiteren Entnahme aus der Flüssigphase würde der Tankdruck theoretisch weiter langsam absinken und damit auch der Hinterdruck der Regeleinheit 17. Schließlich wäre das Ventil 34 vollkommen bis zum konstruktiven Anschlag geöffnet. Hinter der Regeleinheit 17 wird der kryogene Kraftstoff in einem mit Motorkühlwasser betriebenen Wärmetauscher 21 verdampft, auf Umgebungstemperatur angewärmt und anschließend über die Gemischventile dem Motor 27 zugeführt. Im Fahrbetrieb variiert in Abhängigkeit von Lastzuständen die Kraftstoffentnahmemenge ständig. Hierbei treten Zustände auf, bei denen größere Kraftstoffmengen verdampft werden, als momentan vom Fahrzeugmotor benötigt werden (Lastwechsel von großer Motorleistung auf geringere Motorleistung). Diese überschüssigen Mengen führen zu einem Druckanstieg in der Leitung 26 die mit dem Motor 27 verbunden ist. Dies bewirkt, daß der Hinterdruck der Regeleinheit 17 wiederholt über den Umschaltdruck ansteigt und damit die Flüssigentnahme schließt (Anschluß A) und die Gasentnahme öffnet (Anschluß C). Die überschüssige Gasmenge strömt dabei in die gasförmige Phase 18 des Kryotanks 11 zurück und führt hier zu einem Druckanstieg.

Hierdurch wird erreicht, daß der Druck im Kryotank und damit auch der Hinterdruck der Regeleinheit 17 praktisch ständig in der Nähe des Umschaltdruckes liegen. Durch die Hinterdrucksteuerung der Regeleinheit 17 wird daher ein nahezu konstanter Druck in der zum Motor 27 führenden Leitung 26 gewährleistet. Wie in den Ausführungsbeispielen A, B, C beschrieben ist, wird bei großen Entnahmemegen (große Motorleistung und große Druckverluste) bei etwas höhreren Tankdrücken umgeschaltet. ist die Entnahmemenge gering (kleine Motorleistung und geringe Druckverluste), ist der Umschaltdruck nur geringfügig niedriger als der Tankdruck.

Das System mit der Regeleinheit 17 ist zusätzlich mit einer Bypassleitung 29 versehen. Diese ist strömungstechnisch vorzugsweise über eine Drosselstelle 10 auf die Regeleinheit 17 abgestimmt und dient ausschließlich zum Kaltfahren der Flüssigentnahmeleitung. Bei hohem Tankdruck findet neben der Entnahme aus der Gasphase 18 zusätzlich eine geringfügige Entnahme aus der Flüssigphase 19 statt. Hierdurch wird beim Umschaltdruck der Regeleinheit 17 der oben beschriebene Einbruch in der Kraftstoffversorgung vermieden.

### Ausführungsbeispiel:

### A) Verhalten von siedenden kryogenen Flüssigkeiten:

1. Massenentnahme aus der Gasphase des Tanks
   - relativ schnelle Druckabsenkung im Tank
2. Gleichgroße Massenentnahme aus der Flüssigphase
   - deutlich langsamere Druckabsenkung

### B) Verhalten des Reglers bei konstanter, geringer Massenentnahme zum Verbraucher

Annahme:
Umschaltdruck 4 bar (Regler!)
   (bei diesem Druck ist der Regler in der gezeichneten Stellung)

1.Tankdruck 10 bar (z. B. nach längerem Stillstand)
   - Entnahme aus der Gasphase über C
   - oberer Faltenbalg geschlossen
   - unterer Faltenbalg weit nach unten gedrückt
   - Druck im Hiterdruckraum (Anschluß B) ebenfalls ca. 10 bar
2. Tankdruck sinkt durch Entnahme aus der Gasphase relativ schnell (siehe A)
3. Tankdruck 7 bar (nach relativ kurzer Fahrstrecke)
   - Entnahme aus der Gasphase über C
   - oberer Faltbalg geschlossen
   - unterer Faltbalg weniger weit nach unten gedrückt als bei 1.
   - Druck im Hinterdruckraum (Anschluß B) ebenfalls ca. 7 bar
4. Tankdruck 4,1 bar (nach weiterer kurzer Fahrstrecke)
   - Entnahme aus der Gasphase über C
   - oberer Faltenbalg geschlossen
   - unterer Faltenbalg fast geschlossen
   - Druck im Hinterdruckraum (Anschluß B) ebenfalls ca. 4,1 bar
5. Tankdruck 4,0 bar (nach weiterer kurzer Fahrstrecke)
   - oberer Faltenbalg geschlossen ("minimaler Restspalt")
   - unterer Faltenbalg fast geschlossen ("minimaler Restspalt")
   - Druck im Hinterdruckraum (Anschluß B) ebenfalls ca. 4,0 bar
6. Weitere Entnahme - Entnahme aus der Flüssigphase - deutlich langsamere Druckabsenkung im Tank (siehe A)
7. Tankdruck 3,9 bar (nach längerer Fahrzeit)
   - oberer Faltenbalg geringfügig geöffnet (Entnahme über A)
   - unterer Faltenbalg geschlossen
   - Druck im Hinterdruckraum (Anschluß B) ebenfalls ca. 3,9 bar
8. Tankdruck 3,5 bar (nach weiterer Fahrstrecke)
   - oberer Faltenbalg vollkommen geöffnet (bis zum konstruktiv vorgegebenen Anschlag)
   - unterer Faltenbalg geschlossen
   - Druck im Hinterdruckraum (Anschluß B) ebenfalls ca. 3,5 bar

### C) Verhalten des Reglers bei konstanter, großer Massenentnahme zum Verbraucher

Annahme:
Umschaltdruck 4 bar (Regler! )
   (bei diesem Druck ist der Regler in der gezeichneten Stellung)

1. Tankdruck 10 bar (z. B. nach längerem Stillstand)
   - Entnahme aus der Gasphase über C
   - oberer Faltenbalg geschlossen, unterer geöffnet
   - Druck im Hinterdruckraum (Anschluß B) ca. 9,8 bar (Annahme: Druckverlust in der Gasentnahmeleitung vom Tank zum Regler ca. 0,2 bar)
2. Tankdruck sinkt durch Entnahme aus der Gasphase relativ schnell (siehe A)
3. Tankdruck 7 bar (nach relativ kurzer Fahrstrecke)
   - Entnahme aus der Gasphase über C
   - oberer Faltenbalg geschlossen
   - unterer Faltenbalg weniger weit nach unten gedrückt als bei 1. (- geringerer Querschnitt - größerer Druckverlust)
   - Druck im Hinterdruckraum (Anschluß B) ca. 6,7 bar
4. Tankdruck 4,6 bar
   - Entnahme aus der Gasphase über C
   - oberer Faltenbalg geschlossen
   - unterer Faltenbalg fast geschlossen (- großer Druckverlust)
   - Druck im Hinterdruckraum (Anschluß B) ca. 4,1 bar
5. Tankdruck 4,5 bar
   - oberer Faltenbalg geschlossen ("minimaler Restspalt")
   - unterer Faltenbalg geschlossen ("minimaler Restspalt")
   - Druck im Hinterdruckraum (Anschluß B) ca. 4,0 bar (Umschaltdruck des Reglers!)
6. Weitere Entnahme - Entnahme aus der Flüssigphase - deutlich langsamere Druckabsenkung im Tank (siehe A)
7. Tankdruck 4,4 bar
   - oberer Faltenbalg geringfügig geöffnet (Entnahme über A)
   - unterer Faltenbalg geschlossen
   - Druck im Hinterdruckraum (Anschluß B) ca. 3,9 bar
8. Tankdruck 4,0 bar
   - oberer Faltenbalg vollkommen geöffnet
      (bis zum konstruktiv vorgegebenen Anschlag)
   - unterer Faltenbalg geschlossen
   - Druck im Hinterdruckraum (Anschluß B) ca. 3,5 bar

## Patentansprüche

1. System zum Versorgen eines Verbrauchers (27) mit einem kryogenen Medium aus einem Kryotank (11), das über eine Regeleinheit (17) als gasförmige oder flüssige Phase dem Verbraucher (27) zugeführt wird, der über eine Leitung mit der Regeleinheit (17) verbunden ist
**dadurch gekennzeichnet,**
**daß** die Regeleinheit (17) von dem in Abhängigkeit vom Massenverbrauch des Verbrauchers (27) variierenden Hinterdruck so steuerbar ist, daß sich ein nahezu konstanter Druck in der Leitung (26) zwischen der Regeleinheit (17) und dem Verbraucher (27) einstellt.

2. System nach Anspruch 1,
**dadurch gekennzeichnet,**
**daß** der Verbraucher (27) als Motor ausgebildet ist, dem über die Regeleinheit (17) ein als kryogenes Medium im Kryotank (11) gespeicherter Kryokraftstoff zuführbar ist.

3. System nach Anspruch 1 oder 2,**dadurch gekennzeichnet,**
**daß** in der Leitung (26) ein Wärmetauscher (21) angeordnet ist.

4. System nach einem der Ansprüche 1 bis 3,
**dadurch gekennzeichnet,**
**daß** die Regeleinheit (17) Mittel (42, 43, 45; 39, 44, 34, 35, 48) aufweist, die beim Überschreiten eines vorgegeben Hinterdruckes zwischen der Regeleinheit (17) und dem Verbraucher (27) eine Rückführung des gasförmigen Mediums in der gasförmigen Phase (18) des Kryotanks (11) erlauben.

5. System nach einem der Ansprüche 1 bis 4,
**dadurch gekennzeichnet,**
**daß** die Mittel eine Hinterdruckkammer (35) mit einem federbe-lasteten Hinterdruckschließteller (42) aufweisen, die so ausgebildet sind, daß beim Überschreiten des vorgegebenen Hinterdruckes ein mit der gasförmigen Phase (18) des Kryotanks (11) verbundener Kanal (39, C, 20) geöffnet und ein mit der flüssigen Phase (19) des Kryotanks (11) verbundener Kanal (50, 33, A, 25) geschlossen wird, wobei die Hinterdruckkammer (35) nur mit dem Anschluß C oder mit dem Anschluß A verbunden ist.

6. System nach einem der Ansprüche 1 bis 5
**dadurch gekennzeichnet,**
**daß** die Mittel ein Einstellelement (47, 46) für den vorzugebenden Umschaltdruck von der gasförmigen Phase auf die flüssige Phase aufweisen, das die Federkraft (45) des federbelasteten Hinterdruckschließtellers (42) verändert.

7. System nach einem der Ansprüche 1 bis 6
**dadurch gekennzeichnet,**
**daß** die Regeleinheit (17) so ausgebildet ist, daß der Umschalt-druck der Regeleinheit (17) von der gasförmigen Phase auf die flüssige Phase bei großen Verbrauchsmassen sich bei höherem Tankdruck einstellt als bei geringen Verbrauchsmassen.

8. System nach einem der Ansprüche 1 bis 7,
**dadurch gekennzeichnet,**
**daß** der Leitung (26) unter Umgehung der Regeleinheit (17) eine geringe Masse des kryogenen flüssigen Mediums zuführbar ist.

9. System nach Anspruch 8,
**dadurch gekennzeichnet,**
**daß** der Regeleinheit (17) eine Bypassleitung (29) mit einem Drosselglied (10) zugeordnet ist, die eine vom Kryotank (11) zur Regeleinheit (17) geführte Entnahmeleitung (25) für die flüssige Phase überbrückt.

10. Regeleinheit, mit einem Eingang für ein verflüssigtes kryogenes Medium, vorzugsweise einem Kryokaftstoff und einen Eingang für ein gasförmiges kryogenes Medium, vorzugsweise einen Kryokraftstoff, die jeweils über ein Ventil mit einem Ausgang für das kryogene Medium verbunden sind, zur Verwendung in einem System nach einem der Ansprüche 1 bis 9,
**dadurch gekennzeichnet,**
**daß** das Ventil (38) für das gasförmige kryogene Medium ein längsbewegliches Rohr (39) aufweist, das in eine Hinterdruck-kammer geführt ist und von einem in der Hinterdruckkammer (35) angeordneten federbelasteten Hinterdruckschließteller (42) eines Faltenbalges (48) an der Austrittsöffnung (44) verschlossen werden kann,
**daß** das Ventil (34) für das kryogene flüssige Medium einen Faltenbalg (36) mit Schließteller (37) aufweist, der mit dem Rohr (39) verbunden ist, wobei das Ventil (34) durch die Federkraft des Faltenbalges (36) in die Zu-Stellung bewegt wird, sofern durch den Hinterdruckschließteller (42) keine Kraft auf das Rohr (39) ausgeübt wird, und daß
die Hinterdruckkammer (35) und der Eingang (A) über mindestens eine Öffnung (50) mit dem Ausgang (B) verbunden sind.

11. Regeleinheit nach Anspruch 10,
**dadurch gekennzeichnet,**
**daß** der Hinterdruckteller (42) eine deutlich größere druckbeauf-schlagte Fläche aufweist als die Öffnung (44) des Rohres (39).

12. Regeleinheit nach Anspruch 8 oder 9
**dadurch gekennzeichnet,**
**daß** dem längsbeweglichen Rohr (39) Mittel (32) zur Begrenzung des linearen Verschiebeweges derart zugeordnet sind, daß der Hinterdruckschließteller (42) die Öffnung (50) zwischen der Hinterdruckkammer (35) und dem Eingang (A) nicht verschließt
und der Schließteller (37) die Öffnung (50) zwischen dem Eingang (A) und dem Ausgang (B) in Abhängigkeit von auf das Rohr (39) wirkenden Kräften öffnet oder schließt.

13. Verfahren zum Versorgen eines Verbrauchers mit einem kryogenen Medium aus einem Kryotank, das über eine Regeleinheit als gasförmige oder flüssige Phase dem Verbraucher zugeführt wird, insbesondere nach einem der Ansprüche 1 bis 12, wobei
das kryogene Medium nach der Regeleinheit (17) verdampft und dem Verbraucher (27) gasförmig zugeführt wird,
der Druck des verdampfenden kryogenen Mediums zwischen der Regeleinheit (17) und dem Verbraucher (27) als Regel- oder Steuergröße so für die Regeleinheit (17) verwendet wird, daß über die Regeleinheit (17) gasförmiges oder flüssiges Medium zu dem Verbraucher (27) geführt oder gasförmiges Medium in den Kryotank (11 ) zurückgeführt wird und zwischen der Regeleinheit (17) und dem Verbraucher (27) ein nahezu konstanter Druck eingestellt wird.

14. Verfahren nach Anspruch 13,
**dadurch gekennzeichnet,**
**daß** bei Überschreitung eines vorgegebenen Hinterdruckes eine Verbindung zu der gasförmigen Phase (18) des Kryotanks (11) freigeschaltet wird.

15. Verfahren nach Anspruch 13 oder 14,
**dadurch gekennzeichnet,**
**daß** eine Umschaltung der Regeleinheit (17) von der gasförmigen Phase auf die flüssige Phase bei großen Verbrauchsmengen bei höherem Tankdruck erfolgt als bei geringen Verbrauchsmengen.

## Claims

1. System for supplying a consumer (27) with a cryogenic medium from a cryotank (11), which medium is fed to the consumer (27) as a gaseous or liquid phase via a control unit (17), the consumer being connected to the control unit (17) via a pipe, **characterized in that** the control unit (17) can be controlled by the back-pressure, which varies as a function of the mass consumption of the consumer (27), in such a way that a virtually constant pressure is set in the pipe (26) between the control unit (17) and the consumer,(27).

2. System according to Claim 1, **characterized in that** the consumer (27) is designed as a motor, to which a cryofuel, which is stored as a cryogenic medium in the cryotank (11), can be fed via the control unit (17).

3. System according to Claim 1 or 2, **characterized in that** a heat exchanger (21) is arranged in the pipe (26).

4. System according to one of Claims 1 to 3, **characterized in that** the control unit (17) has means (42, 43, 45; 39, 44, 34, 35, 48) which, when a predetermined back-pressure between the control unit (17) and the consumer (27) is exceeded, allow the gaseous medium to be returned to the gaseous phase (18) of the cryotank (11).

5. System according to one of Claims 1 to 4, **characterized in that** the means have a back-pressure chamber (35) with a spring-loaded back-pressure closure disc (42), the chamber being designed in such a way that when the predetermined back-pressure is exceeded, a passage (39, C, 20) which is connected to the gaseous phase (18) of the cryotank (11) is opened and a passage (50, 33, A, 25) which is connected to the liquid phase (19) of the cryotank (11) is closed, the back-pressure chamber (35) being connected only to connection C or connection A.

6. System according to one of Claims 1 to 5, **characterized in that** the means include a setting element (47, 46) for setting the switchover pressure, which is to be preset, from the gaseous phase to the liquid phase, which element changes the spring force (45) of the spring-loaded back-pressure closure disc (42).

7. System according to one of Claims 1 to 6, **characterized in that** the control unit (17) is designed in such a way that the switchover pressure of the control unit (17) from the gaseous phase to the liquid phase is set at a higher tank pressure at large mass consumption rates than at low mass consumption rates.

8. System according to one of Claims 1 to 7, **characterized in that** a small mass of the cryogenic liquid medium can be fed to the pipe (26) by bypassing the control unit (17).

9. System according to Claim 8, **characterized in that** the control unit (17) is assigned a bypass line (29) with a throttling member (10), which bypasses a removal line (25) for the liquid phase leading from the cryotank (11) to the control unit (17).

10. Control unit, having an inlet for a liquefied cryogenic medium, preferably a cryofuel, and an inlet for a gaseous cryogenic medium, preferably a cryofuel, which are in each case connected, via a valve, to an outlet for the cryogenic medium, for use in a system according to one of Claims 1 to 9, **characterized in that** the valve (38) for the gaseous cryogenic medium has a longitudinally moveable tube (39) which is guided into a back-pressure chamber and can be closed at the outlet opening (44) by a spring-loaded back-pressure closure disc (42), arranged in the back-pressure chamber (35), of a bellows (48), **in that** the valve (34) for the cryogenic liquid medium has a bellows (36) with a closure disc (37), connected to the tube (39), the valve (34) being moved into the closed position by the spring force of the bellows (36) provided that the back-pressure closure disc (42) is not exerting any force on the tube (39), and **in that** the back-pressure chamber (35) and the inlet (A) are connected to the outlet (B) via at least one opening (50).

11. Control unit according to Claim 10, **characterized in that** the back-pressure disc (42) has a considerably larger surface area which is acted on by pressure than the opening (44) of the tube (39).

12. Control unit according to Claim 8 or 9, **characterized in that** the longitudinally moveable tube (39) is assigned means (32) for limiting the linear displacement travel in such a manner that the back-pressure closure disc (42) does not close the opening (50) between the back-pressure chamber (35) and the inlet (A), and **in that** the closure disc (37) opens or closes the opening (50) between the inlet (A) and outlet (B) as a function of forces which are acting on the tube (39).

13. Method for supplying a consumer with a cryogenic medium from a cryotank, which medium is fed to the consumer as a gaseous or liquid phase via a control unit, in particular as described in one of Claims 1 to 12, wherein the cryogenic medium is evaporated downstream of the control unit (17) and is fed to the consumer (27) in gas form, the pressure of the evaporating cryogenic medium between the control unit (17) and the consumer (27) is used as a control variable for the control unit (17) in such a way that gaseous or liquid medium is passed to the consumer (27) via the control unit (17) or gaseous medium is returned to the cryotank (11), and a virtually constant pressure is set between the control unit (17) and the consumer (27) .

14. Method according to Claim 13, **characterized in that** if a predetermined back-pressure is exceeded, a connection to the gaseous phase (18) of the cryotank (11) is opened.

15. Method according to Claim 13 or 14, **characterized in that** the control unit (17) is switched over from the gaseous phase to the liquid phase at a higher tank pressure when large quantities are being consumed and when small quantities are being consumed.

## Revendications

1. Système pour alimenter un utilisateur (27) avec un milieu cryogénique provenant d'un réservoir cryogénique (11), ce milieu étant fourni à l'utilisateur (27) par l'intermédiaire d'une unité de régulation (17) sous la forme d'une phase gazeuse ou liquide, l'utilisateur étant relié par une conduite à l'unité de régulation (17),
**caractérisé en ce que**
l'unité de régulation (17) est commandée à partir de la pression secondaire variable dépendant de la consommation massique de l'utilisateur (27) pour qu'il s'établisse une pression pratiquement constante dans la conduite (26) entre l'unité de régulation (17) et l'utilisateur (17).

2. Système selon la revendication 1,
**caractérisé en ce que**
l'utilisateur (27) est un moteur qui reçoit par l'intermédiaire de l'unité de régulation (17) un carburant cryogénique stocké dans le réservoir cryogénique (11) comme milieu cryogénique.

3. Système selon la revendication 1 ou 2,
**caractérisé en ce que**
la conduite (26) est équipée d'un échangeur de chaleur (12).

4. Système selon l'une des revendications 1 à 3,
**caractérisé en ce que**
l'unité de régulation (17) comporte des moyens (42, 43, 45 ; 39, 44, 34, 35, 48) qui, lorsqu'on dépasse une pression secondaire prédéterminée entre l'unité de régulation (17) et l'utilisateur (27), permettent un retour du milieu gazeux dans la phase gazeuse (18) du réservoir cryogénique (11).

5. Système selon l'une des revendications 1 à 4,
**caractérisé en ce que**
les moyens comportent une chambre de pression secondaire (35) avec un plateau de fermeture de pression secondaire (42), chargé par un ressort, cette chambre étant réalisée de façon qu'en dépassant une pression secondaire prédéterminée, un canal (39, C, 20) relié à la phase gazeuse (18) du réservoir cryogénique (11) s'ouvre et un canal (50, 33, A, 25) relié à la phase liquide (19) du réservoir cryogénique (11) se ferme, si bien que la chambre de pression secondaire (35) n'est reliée qu'au branchement (C) ou qu'au branchement (A).

6. Système selon l'une des revendications 1 à 5,
**caractérisé en ce que**
les moyens comportent un élément de réglage (47, 46) pour la pression de commutation prédéterminée entre la phase gazeuse et la phase liquide, ce moyen modifiant la force de ressort (45) du plateau de fermeture de pression secondaire (42) chargé par ressort.

7. Système selon l'une des revendications 1 à 6,
**caractérisé en ce que**
l'unité de régulation (17) est réalisée pour que la pression de commutation de l'unité de régulation (17) pour passer de la phase gazeuse à la phase liquide pour des masses consommées importantes, se règle à une pression de réservoir plus élevée que pour des masses consommées faibles.

8. Système selon l'une des revendications 1 à 7,
**caractérisé en ce que**
la conduite (26) reçoit une masse de milieu liquide cryogénique moindre en contournant l'unité de régulation (17).

9. Système selon la revendication 8,
**caractérisé en ce que**
l'unité de régulation (17) comporte une conduite de dérivation (29) avec un organe d'étranglement (10) qui court-circuite une conduite de prélèvement (25) de phase liquide allant du réservoir cryogénique (11) à l'unité de régulation (17).

10. Unité de régulation comportant une entrée pour un milieu cryogénique liquide, notamment un carburant cryogénique, et une entrée pour un milieu cryogénique gazeux, notamment un carburant cryogénique, ces entrées étant reliées par une soupape ayant une sortie pour le milieu cryogénique, appliquée à un système selon l'une des revendications 1 à 9,
**caractérisée en ce que**
la soupape (38) du milieu cryogénique gazeux comporte un tube (39) mobile longitudinalement, guidé dans une chambre de pression secondaire et qui peut être fermé par un plateau de fermeture de pression secondaire (42) chargé par ressort d'un soufflet (48) à l'orifice de sortie (44),
la soupape (34) de milieu liquide cryogénique comporte un soufflet (36) avec un plateau de fermeture (37) relié au tube (39),
la soupape (34) étant déplacée en position de fermeture par la force de ressort du soufflet (36) dans la mesure où le plateau de fermeture de pression secondaire (42) n'exerce aucune force sur le tube (39), et
la chambre de pression secondaire (35) et l'entrée (A) sont reliées à la sortie (B) par au moins une ouverture (50).

11. Unité de régulation selon la revendication 10,
**caractérisée en ce que**
le plateau de pression secondaire (42) a une surface d'application de la pression beaucoup plus importante que l'ouverture (44) du tube (39).

12. Unité de régulation selon la revendication 8 ou 9,
**caractérisée en ce que**
le tube (39) mobile longitudinalement comporte des moyens (32) pour limiter la course de coulissement linéaire de façon que le plateau de fermeture de pression secondaire (42) ne ferme pas l'ouverture (50) entre la chambre de pression secondaire (35) et l'entrée (A), et
le plateau de fermeture (37) ouvre ou ferme l'ouverture (50) entre l'entrée (A) et la sortie (B) en fonction des forces agissant sur le tube (39).

13. Procédé d'alimentation d'un utilisateur avec un milieu cryogénique venant d'un réservoir cryogénique en alimentant l'utilisateur en phase gazeuse ou liquide à travers une unité de régulation, notamment selon l'une des revendications 1 à 12,
selon lequel,
le milieu cryogénique est évaporé en aval de l'unité de régulation (17) pour être fourni à l'état gazeux à l'utilisateur (27),
la pression du milieu cryogénique vaporisée entre l'unité de régulation (17) et l'utilisateur (27) sert de grandeur de régulation de commande pour l'unité de régulation (17), et du milieu gazeux ou liquide est fourni à l'utilisateur (27) par l'intermédiaire de l'unité de régulation (17) ou est renvoyé comme milieu gazeux dans le réservoir cryogénique (11) et on règle une pression pratiquement constante entre l'unité de régulation (17) et le l'utilisateur (27).

14. Procédé selon la revendication 13,
**caractérisé en ce qu'**
en cas de dépassement d'une pression secondaire prédéterminée, on ouvre une liaison vers la phase gazeuse (18) du réservoir cryogénique (11).

15. Procédé selon les revendications 13 ou 14,
**caractérisé en ce que**
pour de grandes quantités consommées, l'unité de régulation (17) est commutée de la phase gazeuse à la phase liquide à une pression de réservoir plus élevée que pour de faibles quantités consommées.
